# EUROPEAN PATENT SPECIFICATION

(11) **EP 0 558 188 B1**
(45) Date of publication and mention of the grant of the patent: **19.05.1999**
(21) Application number: 93300696.7
(22) Date of filing: 29.01.1993
(51) Int. Cl.: B32B 27/30, B32B 27/32, B65D 65/40

(54) **pH control polymer**
Polymer mit pH-Kontrolle
Polymère avec contrôle du pH

(30) Priority: 30.01.1992 US 828319
(43) Date of publication of application: 01.09.1993
(73) Proprietor: Cryovac, Inc., Duncan, S.C. 29334-0464 (US)
(72) Inventor: Ebner, Cynthia L., Mt.Airy, MD 21771 (US); Roberts, William P., Columbia, MD 21044 (US); Mueller Walter B., Inman, S.C. 29349 (US)
(74) Representative: Bentham, Stephen

(56) References cited:
- EP-A- 0 310 143
- EP-A- 0 444 954
- US-A- 4 532 189
- US-A- 4 599 276
- US-A- 5 023 121

## Description

This invention relates generally to thermoplastic films, and in particular to autoclavable flexible films suitable for the packaging of medical solutions and associated tubing. The invention also relates to a method and means of controlling pH in products packaged in materials having vinyl carboxylate copolymers.

Medical pouches are typically made of a highly plasticized polyvinyl chloride (PVC). More recently, it has been proposed that such pouches be constructed of a flexible film material, as described in U. S. Patent No. 4,643,926 to Mueller, which contains one or more layers of film including a vinyl carboxylate copolymer which enhances the radio-frequency (RF) sealability of the film. U. S. Patent No. 4,599,276 to Martini discloses the copolymer as used in making such films. The above referenced patents represent important steps forward in the art of providing a safe versatile autoclavable medical solution packaging material which can be RF sealed into a pouch. Such pouches are resistant to cracking and embrittlement while remaining flexible and resistant to stress. They also offer these advantages without the need for PVC in the film.

However, it has been found that vinyl carboxylate copolymer resin, such as ethylene vinyl acetate copolymer (EVA), used to enhance the RF sealability of the film, can produce acid extractables such as acetic acid following a typical autoclave sterilization procedure. These acid groups may migrate into the aqueous contents of the medical pouches, causing an undesirable pH shift of the contents. In some cases, this can result in shortening the life of the pouch contents as well as precluding certain solutions from use in such pouches.

US-A-4,532,189 discloses a heat-shrinkable multilayer thermoplastic film comprising a core layer comprising linear low density polyethylene which may be blended with (a) ethylene propylene copolymer (b) ethylene vinyl acetate copolymer (c) ethylene vinyl acetate copolymer and ionomer resin or (d) low density polyethylene. US-A-5,023,121, US-A-4,599,276, EP-A-0,310,143 and EP-A-0,444,954 are also acknowledged as background prior art.

### Summary of the Invention

It is an object of this invention to provide a pouch which has little or no effect on the pH of the enclosed product.

It is a further object of this invention to provide a pouch with a pH controlling film layer.

It is a still further object of this invention to provide a pouch which prevents or impedes the migration of acid into the enclosed contents.

It is a still further and more particular object of this invention to provide a method of manufacturing a pouch with the characteristics described above.

In accordance with the invention, we have found that vinyl carboxylate copolymers such as EVA can be used to advantage in films, especially flexible films for medical applications, while at the same time reducing the pH shift problem described above. This is accomplished by including in the film structure an alkali metal ionomer. The films of the invention may comprise a layer of alkali metal or zinc ionomer derived from carboxylic acid or ethylene methacrylic acid (EMA)-containing polymers. This layer may be present as a distinct film layer, and/or incorporated into a film layer containing the vinyl carboxylate copolymers, the source of the undesired acid extractables, to neutralize the extractables before they migrate into an enclosed pH sensitive product such as intravenous solution.

The present invention therefore provides a film comprising:
(a) a polymeric surface sealant layer;
(b) (i) a core layer comprising a blend of a vinyl carboxylate copolymer resin with an ionomer resin, or
   (ii) a core layer of a vinyl carboxylate copolymer and a layer of an ionomer resin positioned between the sealant layer and the core layer; and
(c) an outer layer of a flexible polymeric material;
   wherein between 60% and 100% of the acid groups of the ionomer in (b) are neutralized and the ionomer in (b) is present in an amount effective to provide pH stabilisation in an extracting medium.

The invention further provides a method of making a multilayered film according to the invention comprising:
(a) blending a vinyl carboxylate copolymer resin with an ionomer resin; and
(b) coextruding a polymeric sealant layer, a core layer of the blend of a vinyl carboxylate copolymer resin with an ionomer resin, and an outer layer of a flexible polymeric material.

The invention further provides a method of making a multilayered film according to the invention comprising:
(a) coextruding a polymeric sealant layer, a layer of an ionomer resin, a core layer of a vinyl carboxylate copolymer, and an outer layer of a flexible polymeric material, said ionomer layer being positioned between said sealant layer and said core layer.

The invention also provides a pouch made of a film of the invention which contains a sterile aqueous solution enclosed within the film.

The invention yet further provides use of the multilayered films of the invention for the manufacture of medical storage pouches containing sterile aqueous solution.

### BRIEF DESCRIPTION OF THE DRAWINGS

Figure 1 is a schematic cross section of a four layer film made in accordance with the invention.
Figure 2 is a schematic cross section of a six layer film made in accordance with the invention.
Figure 3 is a schematic cross section of a five layer film made in accordance with the invention.
Figure 4 is a schematic cross section of a five layer film made in accordance with the invention.
Figure 5 is a schematic cross section of a three layer film made in accordance with the invention.

### DETAILED DESCRIPTION

In accordance with this invention, it has been found that ionomers can be employed in the manufacture of medical storage pouches so as to neutralize undesirable soluble acidic compounds produced during the sterilization of the pouch and its contents. The ionomers are derived from copolymers of unsaturated carboxylic acids or anhydrides (e.g., acrylic acid, methacrylic acid, maleic anhydride, etc.), or EMA. A particularly suitable acid copolymer for use in the invention is ionomer is Surlyn 1707 , available from Du Pont. This is a commercially available resin, and is a sodium salt of an ethylene methacrylic acid copolymer. Other alkali metal ionomers based on sodium or potassium are also available, and useful in connection with the present invention. Ionomers can also be made with starting materials such as Primacor 5990 (Dow), which is an ethylene acrylic acid copolymer having about 2.8 meq (milliequivalents) carboxylic acid groups per gram of resin and a melt index of 1300.

In accordance with this invention, it has also been found that the ionomer resin can be further refined by neutralizing 60-100% of the acid groups with a suitable base. Preferable bases are NaOH and KOH, which produce Na⁺ and K⁺ ions, respectively. It has been found that a high degree of neutralization is advantageous in increasing the effectiveness of the ionomers to act as scavengers for acidic extractables such as acetic acid.

It has also been found that the effectiveness of ionomers can be increased by the formation of hybrid ionomers, i.e., ionomers neutralized with a hydroxide base whose positive ion component differs from that present in the unreacted ionomer. In other words, e.g. a sodium ionomer can be further neutralized with a non-sodium base such as KOH, zinc ionomers further neutralized by reactive extrusion with NaOH, etc.

The ionomer resin, whether of commercial grade, more highly neutralized, or hybridized as described above, is incorporated into a multi-layer film which contains a vinyl carboxylate copolymer resin. The vinyl carboxylate copolymer typically serves the function of enhancing the RF sealability of the film, although it can and does serve other functions as well. The ionomer resin can be blended with the vinyl carboxylate copolymer during or prior to formation of the film layer. Alternatively, the ionomer may be present in a different layer from the vinyl carboxylate copolymer as long as the ionomer is disposed somewhere between the vinyl carboxylate copolymer and the surface of the film which becomes the inner bag or pouch surface (sealing layer), so that it can scavenge acidic materials before they enter the pouch interior.

While not wishing to be bound by any particular theory, the scavenging is believed to occur by a favorable proton transfer from carboxylic acid extractables (e.g., acetic acid) to a carboxylate group on the ionomer, which results in the conversion of the acid extractable to the corresponding alkali metal salt. The alkali metal salt may be itself extractable, but is no longer acidic and therefore does not cause a drop in pH in the extracting medium. The amount of ionomer required and its location(s) are determined by the amount of acid produced as well as the degree of ionomer neutralization. Thus, the total alkali metal content present in the film should exceed the amount of acid to be scavenged. In the practical sense, the effective amount is determined as that amount which is sufficient to provide pH stabilization in the extracting medium.

The effective amount may be controlled by the type of ionomer selected, the thickness of the ionomer film layer, the degree of ionomer neutralization, the base used to neutralize the ionomer, as well as the percentage of ionomer which comprises a film layer.

Having generally described the invention, the following specific examples are given as a further illustration thereof.

### Example 1:

### Solution Preparation of 90% Neutralized K-P5990 Ionomer

Water (77.9 kg - 172 lbs), potassium hydroxide (KOH) (3.71 kg - 8.2 lbs. of 85% reagent), and an ethylene acrylic acid copolymer (Primacor 5990) (22.6 kg - 50lbs.) were sequentially charged into an agitated stainless steel 113 ℓ (30-gallon) Pfaudler clamp top reactor which was sealed and heated at 100°C for 8 hours.

The resulting aqueous solution was then air dried to a clear resin (the 90% neutralized potassium ionomer of P5990) and ground into small pellets.

### Example 2:

### Reactive Processing of K-P5990 Ionomer (76% neutralization)

Twelve wt. % of KOH (87% pure) was dry mixed with 88 wt. % Primacor 5990, ethylene acrylic acid resin. The blend was run through a Brabender conical twin screw extruder at 220°C, torque 4-5,000. Large oscillations in torque were noted.

### Example 3:

### Reactive Processing of K-P5990 Ionomer with EVA (70% neutralization)

Eleven (11) wt. % KOH (87% pure) was dry mixed with 89 wt. % of Primacor 5990. This mixture was cut 90:10 with a vinyl carboxylate copolymer (EVA) (Elvax 3182-2) as the 10% component. The resultant EVA and ionomer mixture was found to extrude consistently with a steady torque and a homogeneous extrudate. 5.44 kg (12 lbs) of material were successfully extruded at 160°C at a rate of 1.4 - 2.3 kg/hour (3-5 lbs./hour).

### Example 4:

### Preparation of Multilayer Film (2.5% Ionomer)

2.5% of 90% neutralized K-Primacor 5990 ionomer (from Example 1) was blended with 97.5% of an EVA mixture consisting of 95 parts Elvax 3182-1 and 5 parts Elvax 3182 master batch. This formed the core layer of a multilayer coextruded film having a sealant layer of 79.9% PLTD 665, an ethylene propylene copolymer (EPC); 20% Kraton G1652 , a styrene ethylene butylene styrene copolymer; and 0.1% A0330, an additive. The film also includes an outer layer of a copolyester, 95% [Ecdel] 9965 and 5% [Ecdel] 9965 master batch; and an adhesive layer between the core layer and outer layer comprising a polymeric adhesive, Bynel E361.

The film had a total thickness of 0.24 mm (9.5 mil).

### Example 5%

### Multilayer Film (5% of 90% Neutralized Ionomer)

A multilayer film was coextruded substantially like that in Example 4. The film differed in that the core layer consisted of 5% of the 90% neutralized ionomer (Example 1) and 95% of the Elvax mixture.

### Example 6:

### Multilayer Film (10% of 70% neutralized Ionomer)

A multilayer film was coextruded substantially like that in Example 4. The film differed in that the core layer consisted of 4% of 90% neutralized ionomer (Example 1) and 1% P 5990 resin and 95% Elvax 3182-2. The total film thickness was 0.24 mm (9.5 mil).

### Example 7:

### Preparation of a Four Layer Film

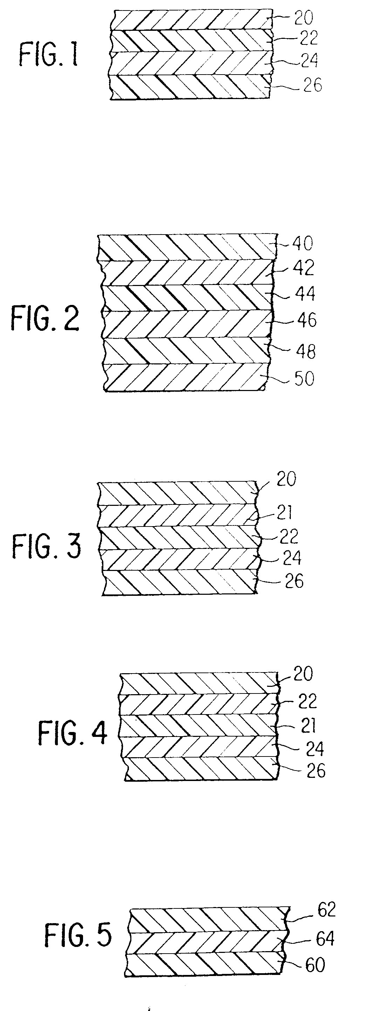

Figure 1 shows a four layer film in accordance with this invention. Sealing layer 20, which is the film layer which is in contact with the medical solution, is preferably a blend of 70-95% of an ethylene propylene copolymer (EPC) such as Fina Z9550 or Exxon PLTD 665 or other similar EPC which is blended with 5-50% of an elastomer. Preferred elastomers are styrene ethylene butylene styrene copolymer (SEBS) such as Kraton G1652: styrene butadiene styrene copolymer (SBS); styrene isoprene styrene copolymer (SIS); ethylene propylene monomer (EPM); or other similar modifier. "Sealant" is used herein to mean the layer facing the pH sensitive product. It includes materials or layers that are RF or heat sealable, or are otherwise sealed together.

The adjacent core layer 22 is preferably a blend of 5-50% of an alkali metal ionomer resin such as Surlyn 1707 available from DuPont which is blended with 50-95% EVA (e.g. Elvax 3182-2) or other EVA, especially EVA with between about 18% and 35% vinyl acetate (VA) by weight of the EVA. Unlike the embodiments described in Examples 1 through 6, the ionomer resin in this embodiment is not further neutralized prior to use. The Surlyn ionomer is able to neutralize acidic compounds produced by the carboxylate copolymer during autoclaving. The proportion of the ionomer can be varied in proportion to the quantity of soluble acidic compounds produced as well as the requirements of the enclosed medical solution.

The third layer 24 is an adhesive layer selected from a polymeric adhesive preferably such as acid or acid anhydride-modified forms of e.g. ethylene methacrylate copolymer (EMA), EVA, linear low density polyethylene (LLDPE), and other olefinic materials. Commercial examples include Bynel E361, Bynel E374, and Bynel E369.

The fourth outside layer 26 is preferably a flexible copolyester such as Eastman Ecdel 9967, Ecdel 9966, or Ecdel 9965, optionally with an appropriate stabilizer as needed.

### Example 8:

### Preparation of a Six Layer Multilayer Film

A six layer film embodiment, seen in reference to Figure 2, has a sealant layer 40 similar in composition to sealant layer 20 described in Example 7 above.

An adhesive layer 42 of a non-EVA based polymeric adhesive is used to secure layer 40 to a pH control ionomer layer 44.

Layer 44 is constructed of an alkali metal based ionomer resin such as Surlyn 1707.

An adjacent core layer 46 preferably comprises EVA, especially one having 18 to 35% VA.

An adjacent adhesive layer 48 and outside layer 50 are constructed similar to layers 24 and 26 respectively as in Example 7 above.

### Example 9:

### Preparation of a Five Layer Multilayer Film

A five layer embodiment of the invention, seen in reference to Figure 3, is similar in construction to Example 7 with the addition of a strength layer 21 positioned between sealant layer 20 and core layer 22. Strength layer 21 is preferably constructed of a blend of between 50 and 90% EPC, 0 to 40% EVA, and 50 to 5% of an alkali metal based ionomer such as Surlyn 1707.

### Example 10:

### Preparation of a Five Layer Multilayer Film

Example 10 is an additional five layer film embodiment as seen in Figure 4. The composition of each film layer is identical to that seen in Example 9, the only difference being that the position of core layer 22 and strength layer 21 is reversed as seen in Figure 4.

### Examples 11-21:

### Preparation of a Hybrid Ionomer Multilayer Film

In further embodiments, as seen in reference to Figure 1, are 4-layer films having a thickness of about 0.22 mm (8.75 mils).

A sealant layer 20 (38 µm - 1.5 mils thick) is in each example provided with 79.9% ethylene propylene copolymer (Z9550, having a major proportion, i.e. more than 50% propylene, and a minor proportion, i.e. less than 50% ethylene); 20.0% SEBS (Kraton G1652); and 0.1% of an additive (AO 330).

The core layer 22 (159 µm - 6.25 mils thick) is in each example a blend of 80% EVA (Elvax 3182-2 having a vinyl acetate content of 28% by weight) and 20% of a mixture of a commercial ionomer further neutralized with an alkali metal hydroxide. These ionomers and hydroxides are identified below. Thus, the core layer composition is the variable in Examples 11 to 21.

A layer 24 (10 µm - 0.4 mils thick) comprises in each example a polymeric adhesive (Bynel E-374).

Outer layer 26 (15 µm - 0.6 mils thick) comprises in each example a blend of 95% copolyester (Ecdel 9965), and 5% of a blend of 90% Ecdel 9965 and 10% of a commercial stabilizer (Irganox 1010) .

Medical storage pouches were constructed according to the above defined construction for Examples 11 to 21, and filled with 20 ml of water and 100 microliters of saturated potassium chloride. Three bottles of water, identified as A, B, and C, were used to fill three respective pouches for each composition (example). They had an initial pH of: A = 5.56; B = 5.63; and C = 5.54. After three successive autoclaving cycles, pH was determined for the three samples of each of examples 11 through 21. The composition of the core layer of each example, and the average final pH of the autoclaved samples, are given below:

| Example | Core layer (each with 80% Elvax 3182-2 + 20% variable) | pH |
|---|---|---|
| 11 | 20% Surlyn 1650 (Zn ionomer) | 4.27 |
| 12 | 20% [99% Surlyn 1605 (Na ionomer) + 1% NaOH] | 4.66 |
| 13 | 20% [99% Surlyn 1650 (Zn ionomer) + 1% NaOH] | 4.35 |
| 14 | 20% [99% Surlyn 1707 (Na ionomer) + 1% NaOH] | 5.12 |
| 15 | 20% [98.67% Surlyn 1702 (Zn ionomer) + 1.33% NaOH] | 4.24 |
| 16 | 20% [98.9% Surlyn 1601 (Na ionomer) + 1.1% KOH] | 5.72 |
| 17 | 20% [98.9% Surlyn 1706 (Zn ionomer) + 1.1% KOH] | 4.39 |
| 18 | 20% [98.9% Surlyn 1650 (Zn ionomer) + 1.1% KOH] | 4.48 |
| 19 | 20% [98.9% Surlyn 1707 (Na ionomer) + 1.1% KOH] | 5.16 |
| 20 | 20% [98.9% Surlyn 1702 (Zn ionomer) + 1.1% KOH] | 4.34 |
| 21 | 20% [97.8% Surlyn 1702 (Zn ionomer) + 2.2% KOH] | 4.51 |

As seen in reference to the above described examples, which are provided for illustration only and are not limitations of the present invention, it is possible to provide a medical storage pouch which overcomes limitations of the prior art. By the addition of an alkali metal ionomer to the film layer containing a vinyl carboxylate copolymer, and/or as a distinct layer between the vinyl carboxylate and the sealant layer the carboxylic acid reacts with the ionomer. This reduces the migration of acidic compounds into a pH sensitive product contained in a pouch or other container made from film of the present invention.

Films in accordance with the present invention can be made by means and methods well known in the art, including conventional lamination, extrusion coating, flat die and tubular coextrusion. Films are typically cast, although for some applications these materials can be hot blown, and can also be oriented. For certain applications, the films are preferably irradiated to crosslink one or more layers of multilayer embodiments.

Figure 6 refers to a three layer embodiments of the invention, in which layers 62 and 60 comprise sealant and outer layers respectively made up of materials such as those already described. Ionomer is included in core layer 64 blended with EVA.

It should be noted that the Detailed Description and specific examples which indicate the present preferred embodiments of the invention are given by way of illustration only. Various changes and modifications within the spirit and scope of the claims will become apparent to those of ordinary skill in the art upon review of the above Detailed Description and examples.

## Claims

1. A multilayered film comprising:
(a) a polymeric surface sealant layer, 20, 40, 62;
(b) (i) a core layer comprising a blend of a vinyl carboxylate copolymer resin with an ionomer resin, 22, 64, or
(ii) a core layer of a vinyl carboxylate copolymer, 46, and a layer of an ionomer resin, 44, positioned between the sealant layer, 40, and the core layer, 46; and
(c) an outer layer of a flexible polymeric material, 26, 50, 60;
wherein between 60% and 100% of the acid groups of the ionomer in (b) are neutralized and the ionomer in (b) is present in an amount effective to provide pH stabilisation in an extracting medium.

2. A film according to claim 1 wherein the outer layer, 26, 50, 60 of flexible polymeric material comprises a copolyester.

3. A film according to claim 1 or 2 wherein the sealant layer, 20, 40, 62, is a blend of ethylene propylene copolymer and an elastomer.

4. A film according to any one of claims 1 to 3 wherein the vinyl carboxylate copolymer is ethylene vinyl acetate copolymer.

5. A film according to any one of the preceding claims which further comprises an adhesive layer, 24, 48, positioned between the core layer, 22, 46, and the outer layer, 26, 50.

6. A film according to any one of the preceding claims wherein the ionomer is an alkali metal and/or zinc based ionomer.

7. A film according to claim 6 wherein the alkali metal is sodium or potassium.

8. A film according to any one of the preceding claims where the ionomer layer, 22, 44, 64, is neutralized by a hydroxide base.

9. A film according to claim 8 wherein the hydroxide base is sodium hydroxide or potassium hydroxide.

10. A method of making a multilayered film according to any one of the preceding claims comprising:
(a) blending a vinyl carboxylate copolymer resin with an ionomer resin; and
(b) coextruding a polymeric sealant layer, 20, 62, a core layer of the blend of a vinyl carboxylate copolymer resin with an ionomer resin, 22, 64, and an outer layer of a flexible polymeric material, 26, 60.

11. A method of making a multilayered film according to any one of claims 1 to 9 comprising:
(a) coextruding a polymeric sealant layer, 40, a layer of an ionomer resin, 44, a core layer of a vinyl carboxylate copolymer, 46, and an outer layer of a flexible polymeric material, 50, said ionomer layer being positioned between said sealant layer, 40, and said core layer, 46.

12. A pouch made of a film according to any one of claims 1 to 9 which contains a sterile aqueous solution enclosed within the film.

13. Use of a multilayered film as defined in any one of claims 1 to 9 for the manufacture of medical storage pouches containing sterile aqueous solution.

## Patentansprüche

1. Mehrschichtenfolie, die
(a) eine polymere Oberflächensiegelschicht, 20, 40, 62,
(b) (i) eine Kernschicht, die ein Gemisch aus Vinylcarboxylat-Copolymerharz mit Ionomerharz umfaßt, 22, 64, oder
(ii) eine Kernschicht aus Vinylcarboxylat-Copolymer, 46, und eine Schicht aus Ionomerharz, 44, die zwischen der Siegelschicht, 40, und der Kernschicht, 46, angeordnet sind, und
(c) eine Außenschicht aus flexiblem polymeren Material, 26, 50, 60,
umfaßt, wobei zwischen 60 % und 100 % der Säuregruppen des Ionomers in (b) neutralisiert sind und das Ionomer in (b) in einer Menge vorhanden ist, die effektiv ist, um pH-Wertstabilisierung in einem Extraktionsmedium zu liefern.

2. Folie nach Anspruch 1, bei der die Außenschicht, 26, 50, 60, aus flexiblem polymeren Material Copolyester umfaßt.

3. Folie nach Anspruch 1 oder 2, bei der die Siegelschicht, 20, 40, 62, ein Gemisch aus Ethylen/Propylen-Copolymer und Elastomer ist.

4. Folie nach einem der Ansprüche 1 bis 3, bei der das Vinylcarboxylat-Copolymer Ethylen/Vinylacetat-Copolymer ist.

5. Folie nach einem der vorhergehenden Ansprüche, die ferner eine Haftschicht, 24, 48, umfaßt, die zwischen der Kernschicht, 22, 46, und der Außenschicht, 26, 50, angeordnet ist.

6. Folie nach einem der vorhergehenden Ansprüche, bei der das Ionomer auf Alkalimetall und/oder Zink basierendes Ionomer ist.

7. Folie nach Anspruch 6, bei der das Alkalimetall Natrium oder Kalium ist.

8. Folie nach einem der vorhergehenden Ansprüche, bei der die Ionomerschicht, 22, 44, 64, durch eine Hydroxidbase neutralisiert ist.

9. Folie nach Anspruch 8, bei der die Hydroxidbase Natriumhydroxid oder Kaliumhydroxid ist.

10. Verfahren zur Herstellung von Mehrschichtenfolie gemäß einem der vorhergehenden Ansprüche, bei dem
(a) Vinylcarboxylat-Copolymerharz mit Ionomerharz gemischt wird und
(b) eine polymere Siegelschicht, 20, 62, eine Kernschicht aus dem Gemisch aus Vinylcarboxylat-Copolymerharz mit Ionomerharz, 22, 64, und eine Anßenschicht aus flexiblem polymeren Material, 26, 60, coextrudiert werden.

11. Verfahren zur Herstellung von Mehrschichtenfolie gemäß einem der Ansprüche 1 bis 9, bei dem
(a) eine polymere Siegelschicht, 40, eine Schicht aus Ionomerharz, 44, eine Kernschicht aus VinylcarboxylatCopolymer, 46, und eine Anßenschicht aus flexiblem polymeren Material, 50, coextrudiert werden, wobei die Ionomerschicht zwischen der Siegelschicht, 40, und der Kernschicht, 46, angeordnet ist.

12. Aus einer Folie gemäß einem der Ansprüche 1 bis 9 hergestellter Beutel, der eine in der Folie eingeschlossene sterile wäßrige Lösung enthält.

13. Verwendung einer Mehrschichtenfolie gemäß der Definition in einem der Ansprüche 1 bis 9 zur Herstellung von medizinischen Anfbewahrungsbeuteln, die sterile wäßrige Lösung enthalten.

## Revendications

1. Film multicouches comprenant :
(a) une couche de soudage de surface polymère, 20, 40, 62 ;
(b)(i) une couche centrale comprenant un mélange d'une résine copolymère de carboxylate de vinyle avec une résine ionomère, 22, 64, ou
(ii) une couche centrale d'un copolymère de carboxylate de vinyle, 46, et une couche d'une résine ionomère, 44, placée entre la couche de soudage, 40, et la couche centrale, 46 ; et
(c) une couche externe d'un matériau polymère flexible, 26, 50, 60 ;
dans lequel entre 60% et 100% des groupes acides de l'ionomère dans (b) sont neutralisés et l'ionomère dans (b) est présent en une quantité efficace pour permettre une stabilisation du pH dans un milieu d'extraction.

2. Film selon la revendication 1, dans laquelle la couche externe, 26, 50, 60 du matériau polymère flexible comprend un copolyester.

3. Film selon la revendication 1 ou 2, dans lequel la couche de soudage 20, 40, 62 est un mélange de copolymère d'éthylène-propylène et d'un élastomère.

4. Film selon l'une quelconque des revendications 1 à 3, dans lequel le copolymère de carboxylate de vinyle est un copolymère d'éthylène-acétate de vinyle.

5. Film selon l'une quelconque des revendications précédentes qui comprend en outre une couche adhésive 24, 48, placée entre la couche centrale, 22, 46 et la couche externe, 26, 50.

6. Film selon l'une quelconque des revendications précédentes, dans lequel l'ionomère est un ionomère à base de métal alcalin et/ou de zinc.

7. Film selon la revendication 6, dans lequel le métal alcalin est du sodium ou du potassium.

8. Film selon l'une quelconque des revendications précédentes, où la couche d'ionomère, 22, 44, 64 est neutralisée par une base hydroxyde.

9. Film selon la revendication 8, dans lequel la base hydroxyde est de l'hydroxyde de sodium ou de l'hydroxyde de potassium.

10. Méthode de préparation d'un film multicouches selon l'une quelconque des revendications précédentes, comprenant :
(a) le mélange d'une résine de copolymère de carboxylate de vinyle avec une résine ionomère ; et
(b) la co-extrusion d'une couche de soudage polymère, 20, 62, d'une couche centrale du mélange d'une résine de copolymère de carboxylate de vinyle avec une résine ionomère, 22, 64, et d'une couche externe d'un matériau polymère flexible, 26, 60.

11. Méthode de préparation d'un film multicouches selon l'une quelconque des revendications 1 à 9 comprenant :
(a) la co-extrusion d'une couche de soudage polymère, 40, d'une couche d'une résine ionomère, 44, d'une couche centrale d'un copolymère de carboxylate de vinyle, 46, et d'une couche externe d'un matériau polymère flexible, 50, ladite couche d'ionomère étant placée entre ladite couche de soudage, 40, et ladite couche centrale, 46.

12. Poche préparée à partir d'un film selon l'une quelconque des revendications 1 à 9, qui contient une solution aqueuse stérile enfermée dans le film.

13. Utilisation d'un film multicouches tel que défini dans l'une quelconque des revendications 1 à 9, pour la fabrication de poches de stockage médicales contenant une solution aqueuse stérile.
